Europäisches Patentamt

European Patent Office

Office européen des brevets

(11) Veröffentlichungsnummer: **0 392 402**
**A2**

## (12) EUROPÄISCHE PATENTANMELDUNG

(21) Anmeldenummer: **90106711.6**

(51) Int. Cl.⁵: **A23L 1/16**

(22) Anmeldetag: **07.04.90**

(30) Priorität: **10.04.89 DE 3911649**

(43) Veröffentlichungstag der Anmeldung:
**17.10.90 Patentblatt 90/42**

(84) Benannte Vertragsstaaten:
**AT BE CH DE ES FR GB GR IT LI LU NL SE**

(71) Anmelder: **Maroudas, Johann**
**Nordfelder Reihe 20**
**D-3000 Hannover(DE)**

(72) Erfinder: **Maroudas, Johann**
**Nordfelder Reihe 20**
**D-3000 Hannover(DE)**

(74) Vertreter: **Junius, Walther, Dr.**
**Wolfstrasse 24**
**D-3000 Hannover 81(DE)**

(54) **Verfahren und Masse zur Herstellung von Teigwaren.**

(57) Die Erfindung betrifft ein Verfahren und eine Masse zur Herstellung von Teigwaren aus einem Teig, welcher aus Mehl, einer Flüssigkeit und einem Bindemittel durch Zusammengeben und Mischen hergestellt ist. Es ist die Aufgabe der vorliegenden Erfindung, eine sehr einfache Möglichkeit der Herstellung von Teigwaren zu schaffen, bei der bisher ungenutzte Abfallprodukte der Milchwirtschaft die Rolle des Bindemittels übernehmen. Die Erfindung besteht darin, daß man frisch erzeugte Molke mit lebenden Kulturen sowohl als Flüssigkeit als auch als Bindemittel bei der Teigherstellung verwendet.

EP 0 392 402 A2

## Verfahren und Masse zur Herstellung von Teigwaren

Die Erfindung betrifft ein Verfahren und eine Masse zur Herstellung von Teigwaren aus einem Teig, welcher aus Mehl, einer Flüssigkeit und einem Bindemittel durch Zusammengeben und Mischen hergestellt ist.

Zur Herstellung von Teigwaren verwendet man einen Teig, welcher aus Getreidemehl, einer Flüssigkeit und einem Bindemittel hergestellt ist. Als Flüssigkeit verwendet man Wasser, aber auch Milch. Als Bindemittel verwendet man Eiweiß aus verschiedenen Quellen, bei hochwertigen Nudeln verwendet man das Eiweiß aus Eiern. Bei der Herstellung von Teigwaren gibt es noch eine große Vielzahl von Zusätzen, die aus verschiedensten Gründen zugesetzt werden.

Durch die FR-PS 977 713 ist es bekannt geworden, Zusätze von gesättigten und ungesättigten Fettsäuren vorzunehmen, z.B. in Form von tierischen und pflanzlichen Ölen und Fetten, Gemüse, Fleisch, Gelatine und anderes. Hierdurch kann man die Geschmacksrichtung einer Teigware beeinflussen. Durch Patents Abstracts of Japan C 332 vom 13. März 1986 sind besser verdauliche Nudeln bekannt geworden, die mit mikrobiologisch aktiven Enzymen bei der Herstellung des Teiges ebenso wie mit einer Mehlmischung aus unpoliertem Reis, Honig und Calcium hergestellt worden sind.

Das Ziel der DE-OS 17 92 586 ist es, durch einen Zusatz an reinem Lab- und/oder Säure-Kasein den Eiweißgehalt zu erhöhen, um eine diätfähige Teigware mit möglichst niedrigem Kohlehydrat- und hohem Eiweißgehalt zu schaffen, die bei der Zubereitung ihre Struktur sowie ihren Charakter als Mehlspeise beibehält und beim Kochen fest und stabil bleibt. In seiner reinen Form ist Kasein nämlich wasserunlöslich und quellbar. Es kocht somit bei der Zubereitung der Teigware nicht aus, so daß auch deren Stabilität erhalten bleibt. Neben dem oder auch anstelle des reinen Kaseins können dem Teig durch Erhitzen von vorzugsweise kaseinfreier Molke gewonnene, feuchte oder getrocknete Rest-Milcheiweißstoffe zugefügt werden, die die gleichen vorteilhaften Wirkungen wie das reine Kasein ausüben. Diese zugesetzen, aus Milch hergestellten Produkte sollen das als Bindemittel zugesetzte Eiweiß nicht ersetzen, sondern sollen in der Teigware neben dem als Bindemittel zugefügten Eiweiß in einer Form zugefügt werden, die derart denaturiert ist, daß zwar ein hoher Eiweißgehalt vorhanden ist, daß Kasein jedoch wasserunlöslich und als Bindemittel nicht mehr verwendbar ist. Derartig denaturierte Milchprodukte enthalten keine lebenden Kulturen mehr, die dann auch nicht mehr enzymatisch wirksam werden können. Ein anderer Vorschlag dieser Druckschrift geht dahin, daß das Kasein der Teigware in lediglich gereinigter, jedoch ungetrockneter Form zugesetzt ist. Auch die neben dem oder anstelle des reinen Kaseins zugesetzten, durch Erhitzen von Molke gewonnenen feuchten oder getrockneten Rest-Milcheiweißstoffe haben bei der Erhitzung die lebenden Kulturen verloren. Daher wird neben dem in dieser Form denaturierten Eiweiß als Bindemittel beispielsweise Eipulver verwendet.

Der übliche Zusatz von Milchpulver, Kasein und noch feuchten oder getrockneten Milch-Reststoffen aus der Molke erfordern einen hohen Energieaufwand, um in diejenige Form gebracht zu werden, in der sie dem Teig zugesetzt werden. Dieser Energieaufwand für die Trocknung und Denaturierung der in Milch enthaltenen Stoffe wird dann aber wieder dadurch zunichte gemacht, daß bei der Teigherstellung wieder Wasser zugesetzt wird, was vorher entzogen worden war. Das macht die Produktion teuer und aufwendig. Der Preis einer Teigware wird aber auch nicht unerheblich durch das verwendete Bindemittel beeinflußt.

Die vorliegende Erfindung vermeidet die Nachteile des Standes der Technik. Es ist die Aufgabe der vorliegenden Erfindung, eine sehr einfache Möglichkeit der Herstellung von Teigwaren zu schaffen, bei der bisher ungenutzte Abfallprodukte der Milchwirtschaft die Rolle des Bindemittels übernehmen.

Die Erfindung besteht darin, daß man frisch erzeugte Molke mit lebenden Kulturen sowohl als Flüssigkeit als auch als Bindemittel bei der Teigherstellung verwendet.

Überraschenderweise wurde festgestellt, daß diese frisch erzeugte Molke mit ihren lebenden Kulturen hervorragend bei der Teigherstellung als Flüssigkeit und als Bindemittel verwendbar ist. Diese frisch erzeugte Molke hat so viel natürliches Milcheiweiß, daß dieses als Bindemittel bei der Teigwarenherstellung dienen kann. Die in der frisch erzeugten Molke noch vorhandenen lebenden Kulturen wirken dabei durch ihr Einwirken auf das Getreidemehl derart, daß sich im Teig weiteres bakteriell erzeugtes Eiweiß findet. Dieses ermöglicht es, z.B. Nudeln völlig ohne sonstiges, als Bindemittel zugesetztes Eiweiß herzustellen.

Als Mehl kann nicht nur Getreidemehl Verwendung finden, sondern auch Kartoffelmehl und die Mehle von Hülsenfrüchten, und zwar einzeln oder deren Gemische.

Bei dieser Art der Teigwarenherstellung werden auch erhebliche Energiemengen eingespart, welche bisher zur Trocknung oder auch nur zur Erhitzung von Molke aufgewandt wurden, um diese zu denaturieren und die in ihr enthaltenen lebenden Kulturen zu vernichten.

Insbesondere zeigen sich die Vorteile dieses Verfahrens bei der Herstellung von Schnellkoch-Teigwaren, wenn man beim Ausformen des Teiges Kapillaren in den Teig einformt. Diese an sich bekannte Möglichkeit einer Herstellung von Schnellkochnudeln - man fügt beispielsweise dem Teig Treibmittel zu (DE 26 59 027 A 1) - ist für dieses Verfahren besonders vorteilhaft, weil der Kochvorgang hierdurch sehr stark abgekürzt wird und dadurch nicht so viel und so starkes Bindemittel für die Stabilisierung der Teigwarenform während des Kochvorganges notwendig ist wie bei Teigwaren ohne Kapillaren.

Die Verwendung von Molke als Bindemittel kann somit durch das Zusammenwirken mit der schnelleren Garung in Folge des Vorhandenseins der Kapillaren zu einem servierfähigen Produkt führen, dem überhaupt nicht anzumerken ist, daß hier nicht die üblichen Bindemittel verwendet worden sind.

Nun ist die Stabilität der nach dem erfindungsgemäßen Verfahren hergestellten Teigware aber nicht nur von dem Vorhandensein von Kapillaren abhängig, die Stärke und Wirkung des Bindemittels ist vielmehr auch von der Zeit abhängig, die man den aus Mehl und Molke bestehenden Teig hat stehen lassen. Bei angemessenen Standzeiten, von z.B. 24 Stunden, ist die Bindekraft der im Teig vorhandenen Eiweißstoffe viel stärker als bei einem sofort nach der Mischung ausgeformten Teig. Das wird daran liegen, daß durch die lebenden Kulturen der Molke innerhalb der Standzeit noch zusätzliche Eiweißmasse erzeugt wird.

Überraschenderweise wurde auch gefunden, daß der Geschmack der erzeugten Teigwaren erheblich variiert werden kann, wenn man der frisch erzeugten Molke lebende Kulturen anderer Bakterienstämme zusetzt. So kann man beispielsweise einer frisch erzeugten Molke aus der Herstellung von Magerquark aus Kuhmilch lebende Kulturen zusetzen, wie sie beispielsweise bei der Ziegenkäse- oder Schafskäse-erzeugung verwendet werden. Durch den Zusatz dieser Kulturen zu der Molke erhält man Teigwaren mit einem strengeren Geschmack einer anderen Geschmacksrichtung.

Die ökonomischen Vorteile durch Einsparung an Energie und hochwertigen Bindemitteln sind beträchtlich. Überraschenderweise ist die Stabilität der Teigware beim Kochen, ihr Geschmack und die Formbarkeit des Teiges nicht oder nur geringfügig unterschiedlich gegenüber herkömmlich hergestellten Teigwaren.

## Ansprüche

1. Verfahren zur Herstellung von Teigwaren aus einem Teig, welcher aus Mehl, einer Flüssigkeit und einem Bindemittel durch Zusammengeben und Mischen hergestellt ist,
dadurch gekennzeichnet,
daß man frisch erzeugte Molke mit lebenden Kulturen sowohl als Flüssigkeit als auch als Bindemittel bei der Teigherstellung verwendet.

2. Verfahren nach Anspruch 1,
dadurch gekennzeichnet,
daß man beim Ausformen des Teiges Kapillaren in den Teig einformt.

3. Verfahren nach Anspruch 1,
dadurch gekennzeichnet,
daß man den Teig eine angemessene Zeit stehen läßt.

4. Verfahren nach Anspruch 1,
dadurch gekennzeichnet,
daß man der frisch erzeugten Molke lebende Kulturen anderer Bakterienstämme zusetzt.

5. Masse zur Herstellung von Teigwaren, wie Nudeln, Spaghetti, Makkaroni und Granulaten, bestehend aus einer Mischung aus Getreidemehl und frisch erzeugter Molke mit lebenden Kulturen und/oder Mehl von Hülsenfrüchten und/oder Kartoffelmehl.